# DEMANDE DE BREVET EUROPEEN

(11) **EP 2 157 149 A2**
(43) Date de publication de la demande: **24.02.2010**
(21) Numéro de dépôt: 09166189.2
(22) Date de dépôt: 23.07.2009
(51) Int. Cl.: C09J 177/00, C09J 177/06, C09J 9/02, C01B 31/02, H01B 1/24, C08J 3/22, C08K 3/04, C08K 7/24

(54) **utilisation d'une dispersion de nanotubes de carbone dans un copolyamide comme composition adhesive conductrice**

(30) Priorité: 08.08.2008 FR 0855496; 07.08.2008 US 187821
(71) Demandeur: ARKEMA FRANCE, 92700 Colombes (FR)
(72) Inventeur: Brule, Benoît, 27170 BEAUMONT-LE-ROGER (FR); Bussi, Philippe, 78000 VERSAILLES (FR); Modicom, David, 27370 TOURVILLE LA CAMPAGNE (FR)

(57) **Abrégé**

La présente invention concerne l'utilisation, comme composition adhésive conductrice de l'électricité, d'une composition renfermant : (a) des nanotubes de carbone et (b) au moins un copolyamide susceptible d'être obtenu à partir d'au moins deux produits de départ différents choisis parmi : (i) les lactames, (ii) les acides aminocarboxyliques et (iii) des quantités équimolaires de diamines et d'acides dicarboxyliques.

Elle concerne encore l'utilisation d'une dispersion de nanotubes de carbone, dans un tel copolyamide, pour fabriquer une composition adhésive conductrice de l'électricité.

## Description

La présente invention concerne l'utilisation, comme composition adhésive conductrice de l'électricité, d'une composition renfermant des nanotubes de carbone, et au moins un copolyamide.

Il est connu que certains copolyamides présentent des propriétés adhésives permettant d'envisager leur utilisation dans la fabrication de colles thermofusibles ayant une bonne résistance à l'eau chaude et au nettoyage à sec, notamment pour le thermosoudage de textiles à basse température (US-5,459,230 ; FR 2 228 813 ; FR 2 228 806 ; US 2002/0022670) ou à haute température (DE 1 594 233).

Pour certaines applications industrielles, il peut être intéressant de conférer à ces colles des propriétés de dissipation électrique pour éviter l'accumulation de charges électrostatiques, susceptibles d'engendrer des problèmes de sécurité, voire d'attirer les poussières.

Une solution classiquement utilisée pour conférer des propriétés conductrices à des matériaux polymères consiste à y disperser des charges conductrices telles que du noir de carbone, dans des quantités allant généralement de 7 à 30% en poids et, plus précisément, dans des quantités allant de 7 à 20% en poids pour des noirs de carbone très structurés et de 15 à 30% en poids pour des noirs de carbone peu structurés.

Or, il est apparu à la Demanderesse que l'introduction de telles quantités de noir de carbone dans certains copolyamides augmentait le module de flexion de ces matériaux et réduisait leurs propriétés d'adhésion.

Il est du mérite de la Demanderesse d'avoir identifié une autre solution permettant d'augmenter la conductivité de ces copolyamides tout en leur conservant des propriétés d'adhésion, et de proposer ainsi une composition à base de copolyamide, utilisable comme colle conductrice.

La présente invention a ainsi pour objet l'utilisation, comme composition adhésive conductrice de l'électricité, d'une composition renfermant : (a) des nanotubes de carbone et (b) au moins un copolyamide susceptible d'être obtenu à partir d'au moins deux produits de départ différents choisis parmi : (i) les lactames, (ii) les acides aminocarboxyliques et (iii) des quantités équimolaires de diamines et d'acides dicarboxyliques.

La présente invention a également pour objet l'utilisation d'une dispersion desdits nanotubes dans ledit copolyamide pour fabriquer une composition adhésive conductrice de l'électricité.

En préambule, il est précisé que l'expression "compris(e) entre" utilisée dans la suite de cette description doit s'entendre comme incluant les bornes citées.

Les constituants de la composition utilisée selon l'invention seront maintenant décrits en détail.

### Copolyamide

La composition utilisée selon l'invention comprend, comme premier constituant, un copolyamide qui peut être formé à partir de monomères quelconques, pour autant qu'il présente des propriétés adhésives, en particulier dans des opérations de soudage à chaud.

Ce copolyamide a de préférence une température de fusion comprise entre 40 et 150°C, de préférence entre 70 et 140°C. De manière particulièrement avantageuse, la masse moléculaire moyenne en nombre de ce copolyamide peut être comprise entre 5.000 et 15.000 g/mol.

Selon une variante préférentielle, un choisira un copolyamide relativement fluide. Par exemple, dans le cas particulier du copolyamide commercialisé sous la dénomination commerciale Platamid^{®} H106 par la société ARKEMA, l'indice d'écoulement à l'état fondu (ci-après, MFI), qui traduit ce caractère de fluidité, sera d'au moins 10, de préférence d'au moins 15 g/10 min et plus préférentiellement d'au moins 20 g/10 min, à 130°C sous une charge de 2,16 kg.

Les copolymères de polyamide, aussi désignés par copolyamides, peuvent être obtenus à partir de divers matériaux de départ : lactames, acides aminocarboxyliques ou quantités équimolaires de diamines et d'acides dicarboxyliques. L'obtention d'un copolyamide nécessite de choisir au moins deux produits de départ différents parmi ceux cités précédemment. Le copolyamide comprend alors au moins ces deux motifs. Il peut ainsi s'agir d'un lactame et d'un acide aminocarboxylique ayant un nombre différent d'atomes de carbone, ou de deux lactames ayant des masses moléculaires différentes, ou encore d'un lactame combiné à une quantité équimolaire d'une diamine et d'un acide dicarboxylique.

Le copolyamide utilisé selon l'invention peut par exemple être obtenu à partir de (i) au moins un lactame choisi parmi le lauryllactame et/ou le caprolactame, de préférence une combinaison de ces deux lactames, et d'au moins un autre précurseur de polyamide choisi parmi (ii) les acides aminocarboxyliques et (iii) des quantités équimolaires de diamines et d'acides dicarboxyliques.

L'acide aminocarboxylique est avantageusement choisi parmi les α,ω-aminoacides carboxyliques tels que l'acide 11-aminoundécanoïque ou l'acide 12-aminododécanoïque.

De son côté, le précurseur (iii) peut notamment être une combinaison d'au moins un diacide carboxylique aliphatique, cycloaliphatique ou aromatique en C₆-C₃₆, tel que l'acide adipique, l'acide azélaïque, l'acide sébacique, l'acide brassylique, l'acide n-dodécanedioïque, l'acide téréphtalique, l'acide isophtalique ou l'acide 2,6-naphtalène dicarboxylique avec au moins une diamine aliphatique, cycloaliphatique, arylaliphatique ou aromatique en C₄-C₂₂, telle que l'hexaméthylène diamine, la pipérazine, le 2-méthyl-1,5-diaminopentane, la m-xylylène diamine ou la p-xylylène diamine ; étant entendu que lesdits diacide(s) carboxylique(s) et diamine(s) sont utilisés, lorsqu'ils sont présents, en quantité équimolaire.

Le copolyamide selon l'invention peut avantageusement comporter des précurseurs provenant de ressources issues de matières premières renouvelables, c'est-à-dire comportant du carbone organique d'origine renouvelable déterminé selon la norme ASTM D6866. Parmi ces monomères issus de matières premières renouvelables, on peut notamment citer l'acide 9-aminononanoïque, l'acide 10-aminodécanoïque, l'acide 12-aminododécanoïque et l'acide 11-aminoundécanoïque et ses dérivés, notamment l'acide N-heptyl-11-aminoundécanoïque, ainsi que les diamines et diacides explicités dans la demande PCT/FR2008/050251. Sont en particulier susceptibles d'être envisagés:
- les diamines choisies parmi la butanediamine (z=4), la pentanediamine (z=5), l'hexanediamine (z=6), l'heptanediamine (z=7), la nonanediamine (z=9), la décanediamine (z=10), l'undécanediamine (z=11), la dodécanediamine (z=12), la tridécanediamine (z=13), la tetradécanediamine (z=14), l'hexadécanediamine (z=16), l'octadécanediamine (z=18), l'octadécènediamine (z=18), l'eicosanediamine (z=20), la docosanediamine (z=22) et les diamines obtenues à partir d'acides gras, et
- les diacides choisis parmi l'acide succinique (w=4), l'acide adipique (w=6), l'acide heptanedioïque (w=7), l'acide azélaïque (w=9), l'acide sébacique (w=10), l'acide undécanedioïque (w=11), l'acide dodécanedioïque (w=12), l'acide brassylique (w=13), l'acide tetradécanedioïque (w=14), l'acide hexadécanedioïque (w=16), l'acide octadécanoïque (w=18), l'acide octadécènoïque (w=18), l'acide eicosanedioïque (w=20), l'acide docosanedioïque (w=22) et les dimères d'acides gras contenant 36 carbones.

On préfère utiliser comme précurseurs de polyamide une combinaison d'acide adipique et d'hexaméthylène diamine et/ou de l'acide 11-aminoundécanoïque.

Des exemples de copolyamides susceptibles d'être mis en oeuvre dans le cadre de la présente invention sont par exemple les copolyamides 6/6.6/6.10, 6/6.6/6.12, 6/6.6/6.36 ou encore 6/6.6/10.10.

On préfère par ailleurs que la proportion de diacides aromatiques n'excède pas 10% en moles par rapport au poids total des précurseurs de copolyamide.

Selon une forme d'exécution particulièrement préférée de l'invention, le copolyamide est susceptible d'être obtenu à partir de caprolactame, d'acide adipique, d'hexaméthylène diamine, d'acide 11-aminoundécanoïque et de lauryllactame. Dans cette forme d'exécution, il peut par exemple être obtenu à partir de 25 à 35% en poids de caprolactame, de 20 à 40% en poids d'acide 11-aminoundécanoïque, de 20 à 30% en poids de lauryllactame et de 10 à 25% en poids d'un mélange équimolaire d'acide adipique et d'hexaméthylène diamine.

Ces copolymères peuvent être préparés par polycondensation, selon des procédés bien connus de l'homme de l'art. Ils sont par ailleurs disponibles dans le commerce auprès de la société ARKEMA sous la dénomination commerciale PLATAMID^{®} et notamment PLATAMID^{®} H106.

Le copolyamide représente de préférence de 100 à 95% en poids, et plus préférentiellement de 100 à 96% en poids, par rapport au poids total de la composition utilisée selon l'invention.

### Nanotubes

Dans la composition utilisée selon l'invention, le copolyamide est associé à des nanotubes de carbone (ci-après, NTC).

Les nanotubes utilisables selon l'invention peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. Ils sont préférés pour une utilisation dans la présente invention.

Les nanotubes ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g et leur densité apparente peut notamment être comprise entre 0,05 et 0,5 g/cm³ et plus préférentiellement entre 0,1 et 0,2 g/cm³. Les nanotubes multiparois peuvent par exemple comprendre de 5 à 15 feuillets et plus préférentiellement de 7 à 10 feuillets.

Un exemple de nanotubes de carbone bruts est notamment disponible dans le commerce auprès de la société ARKEMA sous la dénomination commerciale Graphistrength^{®} C100.

Ces nanotubes peuvent être purifiés et/ou traités (par exemple oxydés) et/ou broyés et/ou fonctionnalisés, avant leur mise en oeuvre dans le procédé selon l'invention.

Le broyage des nanotubes peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes bruts ou broyés peut être réalisée par lavage à l'aide d'une solution d'acide sulfurique, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone.

On utilise de préférence dans la présente invention des nanotubes bruts éventuellement broyés, c'est-à-dire des nanotubes qui ne sont ni oxydés ni purifiés ni fonctionnalisés et n'ont subi aucun autre traitement chimique.

Les nanotubes peuvent représenter de 0,1 à 5% en poids, de préférence de 0,5 à 4% en poids, et encore plus préférentiellement de 1 à 3% en poids, par rapport au poids de la composition utilisée selon l'invention.

Selon une version avantageuse de l'invention, on peut utiliser des nanotubes fabriqués à partir de ressources issues de matières premières renouvelables, c'est-à-dire comportant du carbone organique d'origine renouvelable déterminé selon la norme ASTM D6866. Un tel procédé de fabrication a notamment été décrit par la Demanderesse dans la demande de brevet EP 08103248.4.

Plus préférentiellement, la composition utilisée selon l'invention peut comprendre des nanotubes et/ou des précurseurs du copolyamide provenant en tout ou partie de ressources issues de matières premières renouvelables au sens de la norme ASTM D6866.

On préfère que les nanotubes et le copolyamide soient mélangés par compoundage à l'aide de dispositifs usuels tels que des extrudeuses bi-vis ou des co-malaxeurs. Dans ce procédé, le copolyamide est typiquement mélangé à l'état fondu avec les nanotubes, soit en une seule étape, soit en deux étapes où la première étape est la réalisation d'un mélange-maître (ou masterbatch) et la seconde étape consiste à mélanger ou diluer le mélange-maître avec le copolyamide. Un mélange-maître formé de copolyamide et de nanotubes peut comprendre de 10 à 30% en poids, avantageusement de 15 à 25% en poids, de nanotubes.

En variante, les nanotubes peuvent être dispersés par tout moyen approprié dans le copolyamide se trouvant en solution dans un solvant. Dans ce cas, la dispersion peut être améliorée, selon une forme d'exécution avantageuse de la présente invention, par l'utilisation de systèmes de dispersion, tels que des ultrasons ou des systèmes rotor-stator, ou d'agents dispersants particuliers.

Un système de rotor-stator est notamment commercialisé par la société SILVERSON sous la dénomination commerciale Silverson^{®} L4RT. Un autre type de système rotor-stator est commercialisé par la société IKA-WERKE sous la dénomination commerciale Ultra-Turrax^{®}.

D'autres systèmes rotor-stator encore sont constitués des moulins colloïdaux, des turbines défloculeuses et des mélangeurs à fort cisaillement de type rotor-stator, tels que les appareils commercialisés par la société IKA-WERKE ou par la société ADMIX.

Les agents dispersants peuvent être notamment choisis parmi les plastifiants qui peuvent être eux-mêmes choisis dans le groupe constitué :
- des alkylesters de phosphates ou d'acide hydroxybenzoïque (dont le groupe alkyle, de préférence linéaire, renferme de 1 à 20 atomes de carbone),
- des phtalates, notamment de dialkyle ou d'alkylaryle, en particulier d'alkylbenzyle, les groupes alkyles, linéaires ou ramifiés, renfermant indépendamment de 1 à 12 atomes de carbone,
- des adipates, notamment de dialkyles,
- des sulfonamides, notamment des aryl sulfonamides dont le groupe aryle est éventuellement substitué par au moins un groupe alkyle contenant de 1 à 6 atomes de carbone, telles que les benzene sulfonamides et les toluene sulfonamides, qui peuvent être N-substituées ou N,N-disubstituées par au moins un groupe alkyle, de préférence linéaire, renfermant de 1 à 20 atomes de carbone, et
- de leurs mélanges.

En variante, l'agent dispersant peut être un copolymère comprenant au moins un monomère hydrophile anionique et au moins un monomère incluant au moins un cycle aromatique, tels que les copolymères décrits dans le document FR-2 766 106, le rapport en poids de l'agent dispersant aux nanotubes allant de préférence de 0,6:1 à 1,9:1.

Dans une autre forme d'exécution, l'agent dispersant peut être un homo- ou un copolymère de vinylpyrrolidone, le rapport en poids des nanotubes à l'agent dispersant allant dans ce cas de préférence de 0,1 à moins de 2.

Selon une autre possibilité, le mélange de nanotubes de carbone et de copolyamide peut être obtenu par dilution d'un mélange-maître commercial tel que le mélange Graphistrength^{®} C M2-20 disponible auprès de la société ARKEMA.

La composition adhésive utilisée selon l'invention peut se présenter sous forme solide, notamment sous forme de poudre, de granules, de feuilles, de fils, de filaments, de filet, etc., ou sous forme liquide ou semi-liquide, avantageusement sous forme de dispersion aqueuse, de solution ou d'émulsion.

Outre le copolyamide et les nanotubes décrits précédemment, ainsi que les plastifiants éventuels mentionnés ci-dessus, elle peut contenir au moins un adjuvant choisi parmi les limitateurs de chaîne, les stabilisants anti-oxygène, les stabilisants à la lumière, les colorants, les agents anti-chocs, les agents antistatiques, les agents ignifugeants, les lubrifiants, et leurs mélanges.

La composition utilisée selon l'invention est plus particulièrement utilisée en tant que colle thermofusible, permettant de souder entre eux des matériaux identiques ou différents choisis notamment parmi : du bois ; du papier ; du carton ; du métal ; du verre ; des textiles synthétiques ou naturels ; du cuir ; des feuilles de matériau polymère tel que des polyesters, des polyoléfines ou des polyamides ; et des câbles auto-adhésifs de bobines de déviation pour tubes cathodiques.

Précisément, la composition adhésive peut se présenter sous la forme de monofilaments, multifilaments, toile, voile ou films. Cette composition adhésive peut également être appliquée sur les matériaux à souder selon des techniques d'enduction à pâte, d'enduction à point poudre ou d'enduction à double point, bien connues de l'homme du métier. Cette composition peut ainsi être déposée soit sur toute la surface des matériaux à souder, soit seulement sur des zones distinctes de ceux-ci, puis le stratifié obtenu peut être comprimé à haute température, typiquement à 80-150°C, et ensuite refroidi à température ambiante. Des étapes ultérieures de séchage et/ou d'évaporation de solvants ne sont généralement pas nécessaires.

L'invention sera maintenant illustrée par les exemples suivants, qui sont donnés à des fins d'illustration seulement et n'ont pas pour but de limiter la portée de l'invention définie par les revendications annexées.

### EXEMPLES

### Exemple 1 : Préparation d'une composition adhésive

Des nanotubes de carbone à parois multiples (Graphistrength^{®} C100 d'ARKEMA) ont été ajoutés à un copolyamide 6/6,6/11/12 ayant une température de fusion de 118°C et un MFI de 22g/10 min à 130°C sous une charge de 2,16 kg (Platamid^{®} H106 d'ARKEMA). Les nanotubes ont été ajoutés à raison de 20% en poids pour former un mélange-maître qui a été ensuite dilué dans une matrice constituée du même copolyamide, au moyen d'une micro-extrudeuse bi-vis DSM équipée d'une filière plate, les paramètres d'extrusion étant les suivants : température : 225°C ; vitesse de rotation : 150 tours/min ; durée de mélangeage : 30 minutes. On a ainsi obtenu des films composites à 3% en poids de nanotubes, ayant une épaisseur de 500 µm et une largeur de 30 mm. Ceux-ci ont été refroidis en sortie de filière à l'aide d'une lame d'air.

### Exemple 2 : Propriétés électriques et adhésives

On a évalué les propriétés résistives et adhésives d'un film selon l'Exemple 1 (ci-après, film A-NTC), par comparaison avec des films similaires à base de Platamid^{®} H106 renfermant 22% en poids de noir de carbone (Ensaco^{®} 250G de TIMCAL) (ci-après, film A-NC) et avec un film de Platamid^{®} H106 exempt de charges conductrices (ci-après, film A) .

Les résistances de surface ont été mesurées en utilisant l'appareil Sefelec M1500P équipé d'électrodes, dans les conditions suivantes :
- tension appliquée : 100 V
- temps de charge avant lecture : 15 secondes
- longueur des électrodes : 30 mm
- distance entre électrodes : 50 mm.

Les propriétés d'adhésion ont été mesurées après application de chacun des films testés, d'une part, sur une feuille de PET de 350 µm d'épaisseur et, d'autre part, entre deux feuilles de PET de 170 µm d'épaisseur. Les structures bicouches et tricouches correspondantes ont été obtenues par pressage à chaud de ces stratifiés dans les conditions ci-dessous :
- température des plateaux chauffants : 150°C
- temps de maintien entre plateaux : 5 min
- pression de maintien : faible.

Ces structures ont été soumises à un essai de pelage sur un dynamomètre DY30, selon une méthode en géométrie libre, en utilisant une vitesse de traverse de 50 mm/min et une cellule de test de 100 N.

Les résultats de ces tests sont rassemblés dans le Tableau 1 ci-dessous.

**Tableau 1**

| | Film A | Film A-NC | Film A-NC |
|---|---|---|---|
| Résistivité (ohm) | 1x10¹² | < 1x10⁶ | < 1x10⁶ |
| Adhésion sur PET - Structure bicouche (N/15 mm) | 6 | 0 | 1 |
| Adhésion sur PET - Structure tricouche (N/15 mm) | 8 | 0 | 2 |

Il ressort de ce tableau que le film constitué de la composition selon l'invention (film A-NTC) est aussi conducteur que le film A-NC tout en présentant de bien meilleures propriétés d'adhésion.

### Exemple 3 : Préparation d'une composition adhésive

Un film analogue à celui de l'Exemple 1 a été fabriqué sur une micro-extrudeuse fonctionnant à 240°C (les autres paramètres d'extrusion étant conformes à l'Exemple 1), excepté qu'il renfermait 2% en poids de nanotubes de carbone.

### Exemple 4 : Essai de pelage

Les propriétés d'adhésion du film obtenu à l'Exemple 3 (ci-après, film B-NTC) ont été comparées à celles d'un film identique mais ne contenant pas de nanotubes de carbone (ci-après, film B), après que chacun de ces films ait été appliqué entre deux feuilles de PET de 175 µm d'épaisseur et que les stratifiés résultants aient été pressés comme indiqué à l'Exemple 2.

Les structures tricouches ainsi obtenues ont été soumises à un essai de pelage sur un dynamomètre DY30, selon une méthode en géométrie libre (angle de 90°), en utilisant une vitesse de traverse de 50 mm/min et une cellule de test de 100 N. L'essai a été réalisé en double.

La moyenne des forces de pelage maximales mesurées lors de ces essais est :
- pour le film B : de 11,5 N/15 mm
- pour le film B-NTC : de 9,5 N/15 mm.

Les forces de pelage observées pour le film constitué de la composition selon l'invention sont donc similaires à celles mesurées pour le film comparatif. Toutefois, le film B-NTC est conducteur, tandis que le film B est un isolant. A cet égard, on a vérifié que la résistance de surface du film B-NTC était inférieure ou égale à 1x10⁶ ohm, alors que celle du film B était de l'ordre de 1x10¹² ohm.

Ces exemples démontrent ainsi que les nanotubes de carbone permettent d'obtenir un compromis de propriétés adhésives et de conduction.

## Revendications

1. Utilisation, comme composition adhésive conductrice de l'électricité, d'une composition renfermant : (a) de 0,1 à 5% en poids de nanotubes de carbone et (b) au moins 95% en poids d'au moins un copolyamide susceptible d'être obtenu à partir d'au moins deux produits de départ différents choisis parmi : (i) les lactames, (ii) les acides aminocarboxyliques et (iii) des quantités équimolaires de diamines et d'acides dicarboxyliques.

2. Utilisation selon la revendication 1, **caractérisée en ce que** le copolyamide est obtenu par polycondensation de (i) au moins un lactame choisi parmi le lauryllactame et/ou le caprolactame, de préférence une combinaison de ces deux lactames, et d'au moins un autre précurseur de polyamide choisi parmi (ii) les acides aminocarboxyliques et (iii) des quantités équimolaires de diamines et d'acides dicarboxyliques.

3. Utilisation selon la revendication 1 ou 2, **caractérisée en ce que** ledit copolyamide a une température de fusion comprise entre 40 et 150°C, de préférence entre 70 et 140°C.

4. Utilisation selon l'une quelconque des revendications 1 à 3, **caractérisée en ce que** l'acide aminocarboxylique est choisi parmi les α,ω-aminoacides carboxyliques.

5. Utilisation selon l'une quelconque des revendications 1 à 4, **caractérisée en ce que** le précurseur (iii) est une combinaison d'au moins un diacide carboxylique aliphatique, cycloaliphatique ou aromatique en C₆-C₃₆ avec au moins une diamine aliphatique, cycloaliphatique, arylaliphatique ou aromatique en C₄-C₂₂ ; étant entendu que lesdits diacide(s) carboxylique(s) et diamine(s) sont utilisés en quantité équimolaire.

6. Utilisation selon la revendication 5, **caractérisée en ce que** le diacide carboxylique est choisi parmi : l'acide adipique, l'acide azélaïque, l'acide sébacique, l'acide brassylique, l'acide n-dodécanedioïque, l'acide téréphtalique, l'acide isophtalique et l'acide 2,6-naphtalène dicarboxylique.

7. Utilisation selon la revendication 5 ou 6, **caractérisée en ce que** la diamine est choisie parmi : l'hexaméthylène diamine, la pipérazine, le 2-méthyl-1,5-diaminopentane, la m-xylylène diamine et la p-xylylène diamine.

8. Utilisation selon la revendication 5, **caractérisée en ce que** ledit précurseur (iii) comprend une combinaison d'acide adipique et d'hexaméthylène diamine.

9. Utilisation selon l'une quelconque des revendications 1 à 8, **caractérisée en ce que** ledit acide aminocarboxylique est l'acide 11-aminoundécanoïque.

10. Utilisation selon l'une quelconque des revendications 1 à 9, **caractérisée en ce que** ledit copolyamide est obtenu à partir de caprolactame, d'acide adipique, d'hexaméthylène diamine, d'acide 11-aminoundécanoïque et de lauryllactame.

11. Utilisation d'une dispersion de nanotubes de carbone, dans un copolyamide selon l'une quelconque des revendications 1 à 10, pour fabriquer une composition adhésive conductrice de l'électricité selon l'une quelconque des revendications 1 à 10.
